## Europäisches Patentamt
## European Patent Office
## Office européen des brevets

(11) Publication number: **0 171 865**
**B1**

(12) **EUROPEAN PATENT SPECIFICATION**

(45) Date of publication of patent specification: **12.04.89**

(51) Int. Cl.⁴: **B 60 J 5/04**

(21) Application number: **85300546.0**

(22) Date of filing: **25.01.85**

(54) **A vehicle door structure.**

(30) Priority: **07.02.84 JP 16232/84 u**

(43) Date of publication of application:
**19.02.86 Bulletin 86/08**

(45) Publication of the grant of the patent:
**12.04.89 Bulletin 89/15**

(84) Designated Contracting States:
**DE GB**

(56) References cited:
**EP-A-0 040 168**
**FR-A-2 101 832**

**PATENTS ABSTRACTS OF JAPAN, vol. 2, no.
107, September 6, 1978, pages 3230 M 78**

**PATENTS ABSTRACTS OF JAPAN, vol. 7, no.
71, (M-202) 1216r, March 24, 1983**

**PATENTS ABSTRACTS OF JAPAN, vol. 7, no.
71 (M-202) 1216r, March 24, 1983**

**PATENTS ABSTRACTS OF JAPAN, vol. 7, no.
79 (M-204) 1224r, March 31, 1983**

(73) Proprietor: **TOYOTA JIDOSHA KABUSHIKI
KAISHA**
**1, Toyota-cho Toyota-shi**
**Aichi-ken 471 (JP)**

(72) Inventor: **Sakakibara, Yozo**
**4-3-20, Kitayamadai Tohgoh-cho**
**Aichi-gun Aichi-ken (JP)**
Inventor: **Okamoto, Yuji**
**Higashi Apart. Room No. 312**
**10, Toyota-cho Toyota-shi Aichi-ken (JP)**

(74) Representative: **Ben-Nathan, Laurence Albert
et al**
**Urquhart-Dykes & Lord 91 Wimpole Street**
**London W1M 8AH (GB)**

(56) References cited:
**PATENTS ABSTRACTS OF JAPAN, vol. 8, no.
207, (M-327) 1644r, Septeber 21, 1984**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a vehicle door structure having a door frame provided with a bracket for mounting a rear view mirror on the door structure, and more particularly to such a structure in which the bracket is located in substantially the same plane as that of a door window and has a thickness which is made as small as possible.

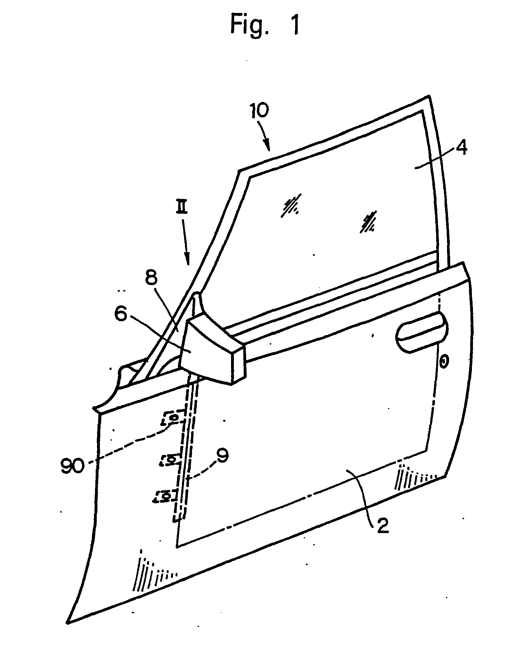

Referring to Figure 1, a door frame 10 is fixed onto a door panel 2. A door window 4 is mounted within the door panel 2 such that the door window 4 can be moved up and down under the control of a vehicle passenger. A door side rear view mirror 6 is located and fixed at a front, lower corner of the window opening defined by the door frame 10 by means of a bracket 8. A guide rail 9 is fixed to the bracket 8 at an upper end portion of the rail and is further fixed to the door 2 by screws 90. The guide rail 9 has a guide groove therein to receive a peripheral portion of the door window 4 during the upward and downward movement of the door window 4.

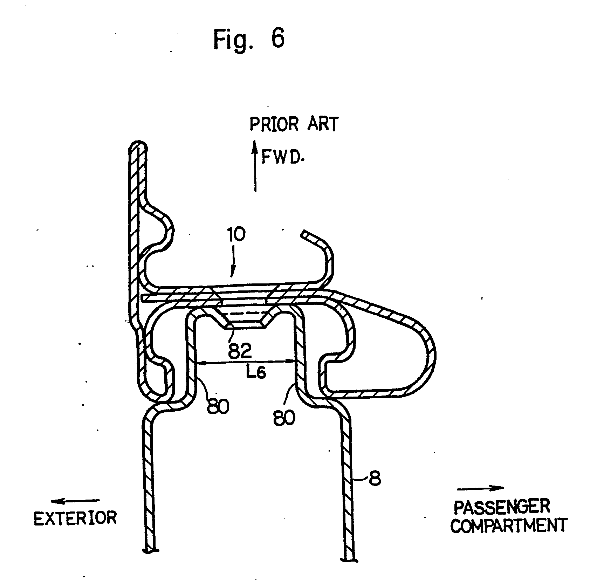

Figure 6 shows a prior door frame equipped with a door side rear view mirror (not shown in Figure 6) which is mounted on the bracket 8. The bracket 8 has a projecting edge portion 80 which protrudes toward the door frame 10. The projecting edge portion 80 has a hole 82 formed at a generally central position thereof through which a screw can extend to fasten the bracket to the door frame 10. According to this prior vehicle door structure, the lateral width $L_6$ of the projecting portion 80, as shown in Figure 6, is sufficient to allow a plurality of burring holes 82 to be formed therein.

To enhance the aesthetic view of a vehicle body, it is desirable to minimize the width of the door frame member 10 in the lateral direction of the vehicle. However if the width of the door frame 10 in the lateral direction of the vehicle is reduced, the lateral width $L_6$ of the projecting edge portion of the bracket will be insufficient to accommodate the burring holes 82 required for fixing the bracket to the door frame.

The present invention was made in view of the foregoing background and seeks to provide an improved vehicle door frame structure. It is an object of this invention to provide a vehicle door structure having a door frame which accommodates in a compact construction a door mirror bracket and a window frame exterior moulding, both securely fastened to the door frame.

Japanese laid-Open Patent Application No. 53-73726 illustrates a vehicle door structure having the features of the preamble of Claim 1. The invention provides a vehicle door structure having the features of the characterising clause of Claim 1.

The above objects, features and advantages of the present invention will become more apparent from the following description of the preferred embodiments taken in conjunction with the accompanying drawings, wherein:

Fig. 1 is a perspective view of a vehicle door equipped with a door mounted rear view mirror;

Fig. 2 is a perspective view of a bracket on which the rear view mirror is mounted, as viewed in the direction of the arrow II in Figure I;

Fig. 3 is a perspective view of a part of a door frame moulding which is fitted on the door frame;

Fig. 4 is a cross-sectional view taken along the line IV-IV in Figure 2;

Fig. 5 is a cross-sectional view taken along the line V-V in Figure 2; and

Fig. 6 is a cross-sectional view of a prior door frame equipped with a bracket for mounting a rear view mirror on the door corresponding to the view of Figure 4.

As shown in Figure 1, a door frame 10 is fixed on a door panel 2. A window 4 is mounted within the door panel 2 such that it can be moved up and down under the control of a vehicle passenger. A door mounted rear view mirror 6 is fastened at a front, lower portion of the door frame 10 by means of a bracket 8. A guide rail 9 is fixed at its upper end to the bracket 8 and is further fixed to the door panel 2 by screws 90. The guide rail 9 has a guide groove therein to receive a peripheral portion of the window 4 during upward and downward movement thereof.

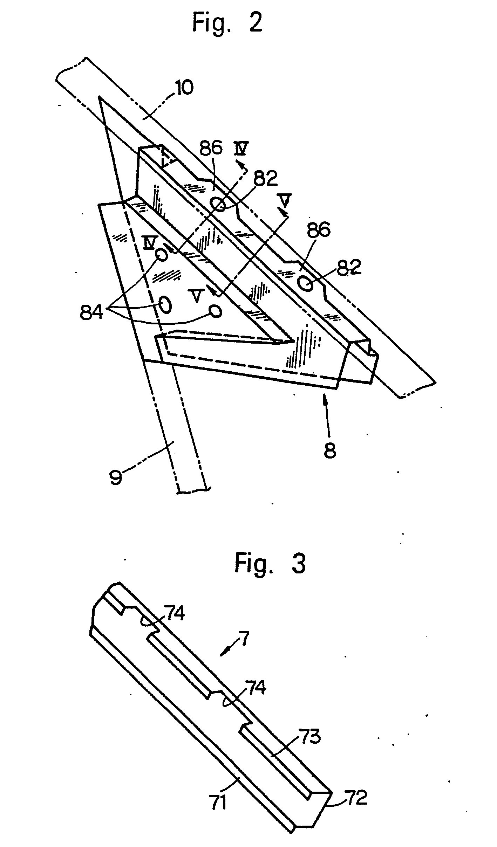

As shown in Figure 2, the bracket 8 is fastened at a front, lower corner portion of the window opening defined between the door frame 10 and the door panel 2 by screws inserted into burring holes 82 formed in the bracket 8 to engage with nuts (not shown in the drawings) which are located at opposed positions to cooperate with the screws. Further burring holes 84 are formed in a side surface of the bracket 8 to receive corresponding screw threaded projections provided on a mounting surface of the rear view mirror. The projections of the mirror 6 are adapted to engage and cooperate with nuts to be fixed onto the bracket 8.

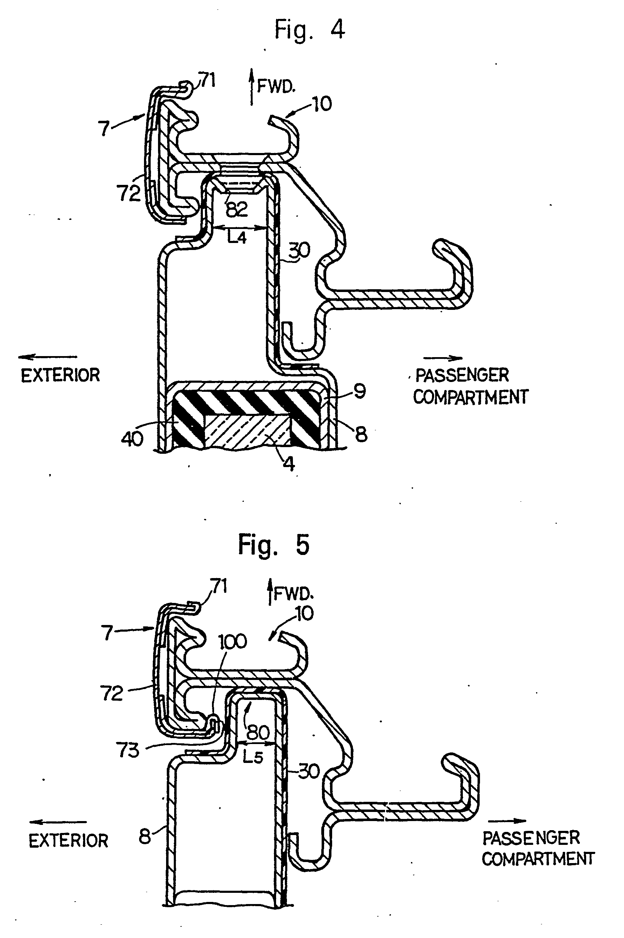

As shown Figures 4 and 5, a protector strip 30, made of a polyvinyl chloride, is stuck onto an edge portion of the bracket 8 to cover that portion. Holes 82 are formed at spaced locations along the projecting edge portion of the bracket as shown in Figure 2. The lateral width $L_4$ of the bracket 8 at the positions where the holes 82 are provided is formed to be greater than the width of the bracket 8 at the remaining positions of the bracket edge projection where no such holes are provided.

As shown in Figure 2, an upper end portion of a guide rail 9 is received in the vertical edge of the bracket 8. The guide rail 9 is fastened to the door panel 2 by screws 90 as shown in Figure I.

Referring to Figure 3 a door frame moulding 7 is fitted onto an exterior surface of the door frame 10 as shown in Figures 4 and 5. The door frame moulding 7 comprises a first flange portion 71, an exterior surface portion 72, and a second flange portion 73. The second flange portion 73 has notches 74 formed therein at positions corresponding to laterally extended portions 86 of the bracket 8 which are provided to accommodate the fixing holes 82, as shown in Figure 2.

Figures 4 and 5 illustrate how the door frame moulding 7 is secured on the door frame 10. As shown in Figure 5, the lower edge flange portion of the door frame moulding 7 engages around an internal edge 100 of the door frame 10 at positions where the fixing holes 82 are not provided, so as to locate the moulding 7 on the door frame. Figure 4 illustrates a position where a notch 74 (see Figure 3) is provided in the moulding lower edge flange portion to accommodate a corresponding laterally extended portion 86 (see Figure 2) of the bracket where a fixing hole 82 is provided.

The numeral 40 shown in Figure 4 designates a cushioning member provided between the guide rail 9 and the door window 4.

Thus, the bracket 8 is formed with laterally extended edge portions 86 only at the positions where the holes 82 are provided, thereby enabling burring holes to be provided therein. Hence, the securing portions for the bracket 8 and the door frame moulding 7 can accommodate in a compact fashion in the lateral direction of the vehicle.

## Claims

1. A vehicle door structure comprising a door frame (10) mounted on a door panel (2) and defining therewith a door window opening (4), and a bracket (8) for mounting a rear view mirror (6) on the door structure, the bracket being located at a front, lower corner of the window opening (4) between the door frame (10) and the door panel (2) and having an edge projection (80) adapted to be secured onto the door frame (10) by fixing means; characterised in that said edge projection (80) of the bracket has a lateral width at position (82) wherein it is secured to the door frame (10) by said fixing means, which is greater than that of the remaining portions thereof where said fixing means is not provided, and in that a door frame moulding (7) attached to the exterior surface of the door frame has an edge portion (73) for engaging the door frame (10) to locate the moulding thereon, said edge portion (73) being formed with notches (74) at positions corresponding to said positions (82) of the bracket edge projection (80) where said fixing means is provided.

2. A vehicle door structure as claimed in Claim 1, characterised in that the vehicle door structure further comprises a guide rail (9) in which a door window (4) is slidably moved, and the guide rail (9) is fixed to the door panel (2).

3. A vehicle door structure as claimed in Claim 1 or Claim 2, characterised in that a protector strip (30) is adhered onto the bracket (8) so that it is interposed between engaging parts of the bracket (8) and the door frame (10).

4. A vehicle door structure as claimed in Claim 3, characterised in that the protector strip (30) is made of a synthetic resin material.

5. A vehicle door structure as claimed in Claim 4, characterised in that the protector strip (30) is made of polyvinyl chloride.

6. A vehicle door structure as claimed in any of Claims 1-5 characterised in that said fixing means comprises a screw and a nut.

7. A vehicle door structure as claimed in any of Claims 1-6, characterised in that the bracket (8) has an aperture (84) through which a screw extends to secure a door mounted rear view mirror (6) onto the bracket (8)

8. A vehicle door structure as claimed in Claim 7, characterised in that the aperture (84) is a burring hole

## Patentansprüche

1. Eine Fahrzeugtürkonstruktion bestehend aus einem Türrahmen (10), der auf einem Türpaneel (2) angebracht ist und damit eine Türfensteröffnung (4) begrenzt, sowie aus einem Stützarm (8) zum Anbringen eines Rückblickspiegels (6) an der Türkonstruktion, wobei der Stützarm sich an einer vorderen unteren Ecke der Fensteröffnung (4) zwischen dem Türrahmen (10) und dem Türpaneel (2) befindet und einen Randvorsprung (80) besitzt der so ausgelegt ist, daß er an dem Türrahmen (10) durch Befestigungsmittel angebracht werden kann; dadurch gekennzeichnet, daß besagter Randvorsprung (80) des Stützarmes in Position (82) eine Seitenbreite aufweist, in welcher er an dem Türrahmen (10) mit jenen Befestigungsmitteln angebracht ist, und welche grösser ist als die der restlichen Teile davon, an denen diese Befestigungsmittel nicht vorhanden sind, sowie dadurch, daß ein an der Außenfläche des Türrahmens angebrachtes Türrahmenformteil (7), ein Randteilstück (73) aufweist, um den Fensterrahmen (10) so einzurücken, daß das Formteil darauf plaziert wird, wobei dieses Randteilstück (73) mit Kerben (74) geformt ist an Stellen, die übereinstimmen mit besagten Stellen (82) des Stützarm-Randvorsprungs (80), wo diese Befestigungsittel vorhanden sind.

2. Eine Fahrzeugtürkonstruktion nach Anspruch 1, dadurch gekennzeichnet, daß die Fahrzeugtürkonstruktion außerdem eine Leitschiene (9) enthält, in welcher ein Türfenster (4) gleitend bewegt wird, wobei die Leitschiene (9) an dem Türpaneel (2) befestigt ist.

3. Eine Fahrzeugtürkonstruktion nach Anspruch oder Anspruch 2, dadurch gekennzeichnet, daß eine Schutzleiste (30) an dem Stützarm (8) haftet, so daß diese zwischen ineinandergreifenden Teilen des Stützarms (8) und des Türrahmens (10) liegt.

4. Eine Fahrzeugtürkonstruktion nach Anspruch 4, dadurch gekennzeichnet, daß die Schutzleiste (30) aus einem Kunstharzstoff gefertigt ist.

5. Eine Fahrzeugtürkonstruktion nach Anspruch 5, dadurch gekennzeichnet, daß die Schutzleiste (30) aus Polyvinylchlorid gefertigt ist.

6. Eine Fahrzeugtürkonstruktion nach einem der Ansprüche 1-5, dadurch gekennzeichnet, daß besagte Befestigungsmittel eine Schraube und eine Mutter umfassen.

7. Eine Fahrzeugtürkonstruktion nach einem der Ansprüche 1-6, dadurch gekennzeichnet, daß der Stützarm (8) eine Öffnung (84) aufweist, durch welche sich eine Schraube erstreckt, um einen an der Tür befestigten Rückblickspiegel (6) an dem Stützarm (8) festzumachen.

8. Eine Fahrzeugtürkonstruktion nach Anspruch 7, dadurch gekennzeichnet, daß die Öffnung (84) ein Gratloch ist.

**Revendications**

1. Structure d'une porte de véhicule comprenant un châssis de porte (10) monté sur un panneau de porte (2) et définissant avec celui-ci une ouverture (4) pour une fenêtre de porte, et un support (8) pour monter un rétroviseur (6) sur la structure de la porte, le support étant disposé à un angle inférieur antérieur de l'ouverture de fenêtre (4) entre le châssis de porte (10) et le panneau de porte (2) et comportant un prolongement latéral (80) susceptible d'être fixé sur le châssis de porte (10) par des moyens de fixation, caractérisée en ce que ledit prolongement latéral (80) du support présente une largeur latérale au point (82), où il est fixé au châssis de porte (10) par lesdits moyens de fixation, qui est supérieure à celle de ses portions restantes où il n'est pas prévu lesdits moyens de fixation, et en ce qu'une pièce moulée (7) pour le châssis de porte, attachée à la surface extérieure du châssis de porte, présente une portion de bord (73) à engager sur le châssis de porte (10) pour y disposer la pièce moulée, ladite portion de bord (73) étant pourvue d'encoches (74) en des régions correspondant auxdits points (82) du prolongement latéral (80) du support où sont prévus lesdits moyens de fixation.

2. Structure d'une porte de véhicule suivant la revendication 1, caractérisée en ce que la structure d'une porte de véhicule comprend en outre un rail de guidage (9) dans lequel une fenêtre de porte (4) se déplace en coulissant, et en ce que le rail de guidage (9) est fixé au panneau de porte (Z).

3. Structure d'une porte de véhicule suivant la revendication 1 ou la revendication 2, caractérisée en ce qu'une bande de protection (30) est collée sur le support (8) de sorte qu'elle soit interposée entre les parties coopérantes du support (8) et du châssis de porte (10).

4. Structure d'une porte de véhicule suivant la revendication 3, caractérisée en ce que la bande de protection (30) est réalisée en un matériau de résine synthétique.

5. Structure d'une porte de véhicule suivant la revendication 4, caractérisée en ce que la bande de protection (30) est réalisée en chlorure de polyvinyle.

6. Structure d'une porte de véhicule suivant l'une ou l'autre des revendications 1 à 5, caractérisée en ce que lesdits moyens de fixation comprennent une vis et un écrou.

7. Structure d'une porte de véhicule suivant l'une ou l'autre des revendications 1 à 6, caractérisée en ce que le support (8) présente une ouverture (84) à travers laquelle passe une vis destinée à fixer un rétroviseur de porte (6) sur le support (8).

8. Structure d'une porte de véhicule suivant la revendication 7, caractérisée en ce que l'ouverture (84) est un trou de soyage.

Fig. 1

Fig. 2

10

86  IV

82

V

86

IV

82

84

0

V

8

9

Fig. 3

74

7

74

73

71

72

## Fig. 4

EXTERIOR

PASSENGER COMPARTMENT

## Fig. 5

EXTERIOR

PASSENGER COMPARTMENT

# Fig. 6

PRIOR ART

FWD.

10

82

L6

80

80

8

EXTERIOR

PASSENGER
COMPARTMENT